Europäisches Patentamt

European Patent Office

Office européen des brevets

(19)

(11) Publication number: **0 149 476**

**A2**

(12) **EUROPEAN PATENT APPLICATION**

(21) Application number: **85100235.2**

(22) Date of filing: **11.01.85**

(51) Int. Cl.⁴: **C 08 F 291/00**
**C 08 F 4/00**

(30) Priority: **13.01.84 JP 5335/84**

(43) Date of publication of application:
**24.07.85 Bulletin 85/30**

(84) Designated Contracting States:
**BE DE FR GB IT NL**

(71) Applicant: **KANEGAFUCHI KAGAKU KOGYO KABUSHIKI KAISHA**
**2-4 Nakanoshima 3-chome**
**Kita-ku Osaka-shi Osaka-fu(JP)**

(72) Inventor: **Somemiya, Akiyoshi**
**9-9, Shioyakita-machi 1-chome Tarumi-ku**
**Kobe-shi Hyogo-ken(JP)**

(74) Representative: **Türk, Dietmar, Dr. rer. nat. et al,**
**Redies, Redies, Türk & Gille Patentanwälte**
**Brucknerstrasse 20**
**D-4000 Düsseldorf 13(DE)**

(54) **Process for preparing composition containing radical initiator and polymer.**

(57) A process for preparing a composition containing radical initiator and polymer which comprises coming a gaseous radical initiator in contact with a polymer. According to the process, it is able to avoid wet step which is necessary a large labor as to cost or operation and a swell step of a polymer is unnecessary.

EP 0 149 476 A2

Croydon Printing Company Ltd.

PROCESS FOR PREPARING COMPOSITION CONTAINING
RADICAL INITIATOR AND POLYMER

The present invention relates to a process for preparing a composition containing a radical initiator and a polymer.

There hitherto has been known a process for modification in order to graftpolymerize onto a polymer as a way giving a novel property and function to the polymer. In general, a process for graftpolymerizing onto a polymer is carried out·in a form of emulsion polymerization, bulk polymerization or solution polymerization, in the presence of polymer to be modified, radical initiator and liquid vinyl monomer in water or organic medium. However, in accordance with these processes, it is necessary much energy and cost because.of separating the graftpolymerized polymer from medium and drying the polymer. In case organic solvent is empolyed as a medium, it is necessary much energy and cost for recovery and purification of organic solvent.

Under the circumstances, it is proposed a process for modification in order to graftpolymerize a polymer without any medium as a dry process as disclosed in Japanese Unexamined Patent Publication (Tokkyo Kokai) 84277/1977. In accordance with this process, after a radical initiator dissolved in a solvent or vinyl monomer is impregnated into a solid polymer, graftpolymerization is carried out while feeding a gaseous vinyl monomer. In this process, however, there are problems that an amount of grafted monomers onto a polymer is a few, a yield of polymerization is low, and so on. The present inventors have proposed a process for modification as disclosed in Japanese Unexamined Patent Publication 34716/1981 that monomers can be efficiently graftpolymerized onto polyphenyleneether, and further a process for modification as disclosed in Japanese Unexamined Publication 174309/1982 that monomers are graftpolymerized onto another polymers. On the other hand, it is proposed in Japanese Unexamined Patent Publication 152817/1981 that the polymer is swollen by organic medium before adding a radical initiator to improve an efficiency of modification.

In accordance with the process as disclosed in the Japanese Unexamined Patent Publication 84277/1977, after a catalyst (radical initiator) is dissolved in a monomer, a monomer is impregnated into a polymer, or a catalyst dissolved in an appropriate solvent is added to a polymer to impregnate the catalyst. A catalyst disclosed in the examples of the Japanese Unexamined Patent Publication 84277/1977 is azoisobutyronitrile or dilaurylperoxide, which does not evaporate under the above-mentioned conditions. And in the processes which are proposed by the present inventors as disclosed in the Japanese Unexmained Patent Publication 34716/1981 and 174309/1982 that the addition method of a radical initiator is a wet method using water or organic solvent.

And further, the method disclosed in the Japanese Unexamined Patent Publication 152817/1981 is different in a point of employing a liquid vinyl monomer in comparison with the methods disclosed in the Japanese Unexamined Patent Publication 84277/1977, 34716/1981 and 174309/1982 in which gaseous vinyl monomer is shown, but the addition of radical initiator is carried out by means of a solution including the initiator in the method of the Japanese Unexamined Patent Publication 152817/1981. Then, this method is a wet method. The radical initiator disclosed in the examples of the Japanese Unexamined Patent Publication 152817/1981 is only azoisobutyronitrile which does not evaporate under the above-mentioned condition. Therefore, the methods publicly known are all wet methods in which solvents are employed in the addition of radical initiators. In accordance with this process, it is obvious that the diffusion or adsorption of gaseous radical initiator is not intended in the adsorption of radical initiator onto the polymer and therefore such a phenomenon does not occur.

In the present invention, it is valuable to avoid a wet step which is necessary large labor, cost or operations and a swell step of polymer which is carried out before adsorption of the initiator in the presence of a gaseous radical initiator.

The radical initiator of the present invention can be employed all radical initiators having vapor pressure at such a temperature that the substantial decomposition of the radical intiator can be disregarded. When the later-mentioned polymer comes in contact with an initiator, it is preferable to have a vapor pressure of at least 5 mmHg when a radical initiator comes in contact with a polymer because of being employed in a vaporized state. When vapor pressure is lower than the above-mentioned pressure, it is not practical that the adsorption efficiency onto a polymer is low. In order to simplify the procedure of contact step as much as possible, it is preferable to employ an initiator having a high vapor pressure. Of course, it is possible to gasify a radical initiator in vacuum. In that case, though an extensive variety of radical initiators can be employed, it is especially preferable to employ a liquid radical initiator at room temperature from the viewpoint of the above-mentioned. Examples of the radical initiators, for instance, are di-ethylperoxide, di-isopropylperoxide, di-t-butylperoxide, di-cumylperoxide, t-butylhydroper-oxide, cumenehydroperoxide, methylethylketoneperoxide, t-butylperoxyisopropyl-carbonate, t-butylperoxyacetate, bis(t-butylperoxy)-butane, 2-t-butylazo-2-cyano-4-methoxy-4-methylpentane, 2-t-butylazo-2-cyano-4-methylpentane, and the like. The radical initiator may be employed alone or in admixute thereof. The polymers which can be employed in the present invention are conventional almost all polymers. In general, modification of polymers by graftpolymerization can be attained so long as they are polymers having aliphatic carbon-hydrogen bonds. In case an inter-penetrating network polymer which is noted in recent is attained, it is possible to select polymers as a starting material from a function and capacity required for the desired polymer. Examples of these polymers, for instance, are polyethylene, chlorinated polyethylene, polypropylene, ethylene propylene copolymer, polybutene, polystyrene, acrylonitrile-styrene copolymer, polyacrylonitrile, polybutylacrylate, polymethylacrylate, polymethylmethacrylate, styrene-methylmethacrylate copolymer, acrylonitrile-vinyl chloride copolymer, polyvinyl chloride, chlorinated polyvinyl chloride, vinyl chloride-vinyl acetate copolymer, polyvinyl alcohol, polyacetal, polyethyleneterephthalate, polybutyleneterephthalate, polycarbonate, nylon-6, nylon-11, polysulfone, polyethersulfone, aromatic polyamide, polyamideimide, polyimide, cellulose, cellulose acetate, polydimethylsiloxane, and the like. The polymers may be employed alone or in admixutre thereof.

In general, these polymers are employed as a powdered state, bluk state, film state, pellet state, beads state, fiber state, and so on accroding to the object. For instance, in case a uniform modification due to graftpolymerizing a polymer is an object, the polymer is generally employed is a powdered state, and in case an improvement of processability is an object, it is possible to employ pellet or beads state of polymers.

The process of the present invention is applicable to a special use on plastic moldings. In case a radical initiator in a solvent is applied, in general, it occurs crack by the residual strain of a plastic forming when the plastic comes in contact with a solvent. In accordance with the present invention, it does not occur crack since a gaseous radical initiator is employed in the present invention. In case a polymer having a low solvent resistance is employed, in general, it occurs deterioration on a surface by the solvent and changes a surface quality. In accordance with the present invention, it is possible to adsorb uniformly without any changing a surface quality.

In the present invention, it is characteristic that the above-mentioned gaseous radical initiator comes in contact with the above-mentioned polymer to be diffused and adsorbed into the polymer. A gasification of a radical initiator, for instance, can be carried out by adding dropwise on the heated metal plate or pipe under normal or reduced pressure. Of course, it is possible to evaporate the radical initiator by spraying it. However, it is not bound to the above-mentioned method. The condition for gasifying the radical initiator is carefully determined in order to secure the safety, diffusing into the polymer and a high efficiency of adsorption while considering the decomposing quality of the radical initiator. From the view-point of safety, it is useful to employ a gas diluted with nitrogen, ethane, etc. in the point of easy gasification. In case, for instance, di-t-butylperoxide is employed as a radical initiator, it is possible to gasify the radical initiator by adding dropwise on a heated pipe of $110^{\circ}$C, and moreover, it is possible to rapidly gasify a radical initiator in stream of nitrogen. Of course, it is possible to gasify a radical initiator at a temperature of $50^{\circ}$ to $80^{\circ}$C under reduced pressure. In gasifying an organic radical initiator, it is useful to obtain a high graft-efficiency in the polymerization step that an initiator is gasified together with an appropriate solvent and a slight amount of solvent is diffused and adsorbed together with the initiator into a polymer. In the process of the present invention, it is most preferable to obtain a composition in which a solvent having a ratio of 0 to 10 % by weight to the polymer and a radical initiator having a ratio of 0.01 to 10 % by weight to the polymer was adsorbed into the polymer.

Though the operations for diffusing and adsorbing a radical initiator into a polymer are varied depending on the features of polymer, it is not absolutely said. For instance, in the most general powder polymer, a sealed reactor having jackets and powder agitator was charged with the polymer, and the space in the reactor is displaced with an inert gas such as nitrogen gas or exhausted in vacuum, and the gaseous radical initiator is passed through the polymer with agitation. In general, it is preferable that the temperature of the polymer is maintained equal or not more than the temperature of the gaseous radical initiator. A temperature difference between a polymer and radical initiator, a concentration of a radical initiator and an affinity between radical initiator and polymer influence on the diffusing and adsorbing of the radical initiator into the polymer. Therefore, it is determined based on the desired function of the final product. In case the modification of only the particle surface is object of the reaction, it is preferable to come gaseous radical initiator in contact with the polymer as low temperature as possible. On the other hand, in case the uniform modification of the whole particle or forming an inter-penetrating network polymer is object of the reaction, it is preferable to come the polymer in contact with the radical initiator having a relatively low concentration at a long time, not so as to provide the temperature difference between the polymer and the radical initiator.

In a conventional process wherein a radical initiator is added in a form of solution to a polymer, it is difficult to change a distribution of the radical initiator depending on the object of the reaction as mentioned above. To the contrary, according to the process of the present invention, applications which cannot be attained by other methods are possible.

In the process of the present invention, it is possible that an inorganic filler, for instance, calcium

- 7 -

0149476

carbonate, talc, clay, titanium white, and the like is existed when the polymer comes in contact with the gaseous radical initiator.

The amount of a radical initiator in the composition of the present invention is from 0.001 to 20 parts by weight, preferably 0.01 to 10 parts by weight, per 100 parts by weight of the polymer. When the amount of the radical initiator is more than 20 parts by weight, it is not preferable because of causing color change of polymer and lower initiator efficiency.

In the present invention, it is important to bring solid polymer into contact with gaseous radical initiator. Accordingly, for instance, in case the radical initiator or the solution thereof is added to the powder polymer while maintaining the powder state in a sealed reactor with agitation, it is in a scope of the present invention that the above addition is carried out in a redused pressure or at a temperature substantially disregarding the decomposition of radical initiator, under the condition gasifying the radical initiator in order to diffuse and adsorb the radical initiator.

The feature of the composition of the present invention is remarkably exhibited when a gaseous vinyl monomer is graftpolymerized onto a polymer. The other useful appilication of the present invention is to obtain the polymer blend by extrusion, Banbury's mixer and the like. In that case, a graftpolymer is formed from the radical initiator-containing polymer composition and another kind of polymers, whereby a polymer-alloy which is improved in compatibility, is obtained.

The process of the present invention is industrially the simplest process, and provides polymer compositions including radical polymerization initiator which are able to provide a variety of modified polymers, at a low cost with easy procedures, and thus the process is of great value.

The present invention is more specifically described and explained by means of the following Examples in which all parts are by weight unless otherwise noted. It is to be understood that the present invention is not limited to the Examples, and vairous changes and modifications may be made in the invention without departing from the spirit and scope thereof.

## Example 1

Ten liter reactor provided with jacket was charged with 2 kg of polyvinyl chloride powder in an inner content and the space in the reactor was displaced with nitrogen gas. The reactor was cooled by water with agitation, and gas diluted with nitrogen gas having 20 % by volume of di-t-butylperoxide gasified by a carburetor heated up to 110°C was passed through the reactor at a flow rate of 1 liter a minute for 1 hour to come in contact with polyvinyl chloride powder. An exhaust gas of the reaction was collected by a trap cooled on a dry-ice and methanol bath to recover 11 % of fed di-t-butylperoxide from the exhaust gas.

Thereafter, the reactor was heated up to 125°C and the polyvinyl chloride was subjected to reaction with agitation for 5 hours to pass a mixed gas containing styrene (concentration: 45 % by volume) gasified at 130°C and nitrogen gas. As a result of the raction, there was obtained a polystyrene-grafted polyvinyl chloride having a graft-efficiency of 23 %. Hereinafter graft-efficiency is defined as follows:

$$\text{Graft-efficiency} \atop (\%) = \frac{\text{Weight of the monomer grafted}}{\text{Weight of the charged polymer}} \times 100$$

## Example 2

The procedures of Example 1 were repeated except that chlorinated polyvinyl chloride was employed instead of polyvinyl chloride powder and methyl methacrylate was employed instead of styrene. As a result of the reaction, there was obtained polymethyl methacrylate-grafted chlorinated polyvinyl chloride having a graft efficiency of 36 % which is improved in compatibility with polyvinyl chloride and has good fluidity.

### Example 3

The procedures of Example 1 were repeated except that polyphenylene oxide powder was employed instead of polyvinyl chloride and the resultant comes in contact with t-butylperoxybenzoate gasified at a temperature of 60°C under reduced pressure. As a result of the reaction, there was obtained a comoposition in which 20 g of t-butylperoxybenzoate per 1 kg of polyphenyleneoxide was adsorbed.

### Example 4

Two kilo-grams of SBS resin pellet on the market (commercially available under the commercial name "TR-KX-65" produced by Shell Oil Co.) and heavy calcium carbonate powder were admixed in a ratio of 9 : 1 by volume and the reactor of Example 1 was charged with the mixture. The above mixture comes in contact with t-butylperoxide gasified at a temperature of 80°C under reduced pressure under cooling and with agitation. As a result of the reaction, there was obtained a composition in which 5 g of t-butylperoxide per 1 kg of SBS resin pellet was adsorbed.

### Example 5

The procedures of Example 1 were repeated except that vinyl chloride-acrylonitrile copolymer fiber was employed instead of polyvinyl chloride powder. As a result of the reaction, there was obtained a composition in which 0.5 g of di-t-butylperoxide per 1 kg of the fiber was adsorbed.

Thereafter, the procedures of Example 1 were repeated except that methyl methacrylate was employed instead of styrene to obtain a fiber having an improved dyeability.

- 10 -    **0149476**

WHAT WE CLAIMED IS:

1. A process for preparing a composition containing radical initiator and polymer which comprises coming a gaseous radical initiator in contact with a polymer.

2. The process of Claim 1, wherein said radical initiator is a radical initiator having a vapor pressure of at least 5 mmHg when a radical initiator comes to contact with a polymer.

3. The process of Claim 1, wherein said radical initiator is a liquid radical initiator at room temperature.

4. The process of Claim 1, wherein said polymer is a polymer having aliphatic carbon-hydrogen bonds.

5. The process of Claim 1, wherein said polymer is employed in a powdered state, bulk state, film state, pellet state, beads state or fiber state.